(19) Europäisches Patentamt
European Patent Office
Office européen des brevets

(11) **EP 3 109 688 B1**

(12) **EUROPEAN PATENT SPECIFICATION**

(45) Date of publication and mention
of the grant of the patent:
**08.01.2020 Bulletin 2020/02**

(21) Application number: **14883255.3**

(22) Date of filing: **21.02.2014**

(51) Int Cl.:
***G02B 27/01*** (2006.01)          ***G02B 3/00*** (2006.01)
***G02B 5/18*** (2006.01)          ***G02B 5/02*** (2006.01)

(86) International application number:
**PCT/JP2014/054212**

(87) International publication number:
**WO 2015/125283 (27.08.2015 Gazette 2015/34)**

(54) **OPTICAL ELEMENT AND HEADS-UP DISPLAY**

OPTISCHES ELEMENT UND HEADUP-ANZEIGE

ÉLÉMENT OPTIQUE ET AFFICHAGE TÊTE HAUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.12.2016 Bulletin 2016/52**

(73) Proprietor: **Pioneer Corporation
Tokyo 113-0021 (JP)**

(72) Inventor: **NOMOTO, Takayuki
Tokyo 113-0021 (JP)**

(74) Representative: **TBK
Bavariaring 4-6
80336 München (DE)**

(56) References cited:
**WO-A1-2008/114502          WO-A1-2013/175549
JP-A- 2012 208 440          JP-A- 2012 237 968
US-A- 5 742 262          US-A1- 2009 135 374
US-A1- 2010 053 565          US-A1- 2013 050 655**

**Description**

TECHNICAL FIELD

The present invention relates to an optical screen for a laser projector.

BACKGROUND TECHNIQUE

A head-up display (hereinafter referred to as "HUD") is a device which makes a driver visually recognize images on an liquid-crystal display or images projected on a screen by a laser projector (i.e., real images) as virtual images by a half-mirror, called "combiner", arranged ahead of the driver's visual field. By this, the driver can visually recognize instruments and navigation information in a manner superimposed on scenery, while watching the front view without lowering his or her visual line.

A HUD utilizing a laser projector generates images, to be visually recognized by the driver as virtual images, by projecting the laser light from a light source on an optical screen. Patent References 1 and 2 disclose preceding art relevant to an optical screen of a HUD utilizing a laser projector.

Patent Reference 1 discloses that an optical element forming an optical screen includes a plurality of optical element units each having a curved surface, and discloses a method of setting pitches of the optical element units such that the diffraction width of the light flux diffused by the optical element becomes equal to or smaller than the pupil diameter of the watcher.

The Patent Reference 2 considers that speckle noise is generated by the edge of the lens, and discloses a method of making the lens pitch larger than the diameter of the laser light so that the laser light is not incident on the edge of the lens.

Patent Reference 1: Japanese Patent Application Laid-open under No. 2013-64985

Patent Reference 2: Japanese Patent No. 5075595
US 2013/050655 A1 describes a screen member that diffuses a bundle of rays of light projected from a laser scanner such that the bundle of rays of light is guided to a viewing range. The screen member includes a plurality of optical elements. A surface of each optical element forms a curved surface that diffuses the bundle of rays of light, which enters the curved surface. The optical elements are arranged in a lattice pattern at each corresponding pitch that is set to adjust a peak-to-peak interval of diffracted rays, which are formed in the viewing range by diffraction of the bundles of rays diffused by the plurality of optical elements, to a value that is equal to or smaller than a diameter of a pupil of the viewer.

US 2010/053565 A1 describes a laser illuminating device and an image display device that enable to remove speckle noises in a diffraction field and an image field, uniformly illuminate an illumination plane, and realize miniaturization.

US 2009/135374 A1 describes that a display device includes: a light source configured to generate a coherent light beam; and an optical plate including a plurality of microlenses arranged with a period larger than the diameter of the light beam, the optical plate being configured to control the divergence angle of the light beam.

WO 2013/175549 A1 describes that a light source unit is characterized by including a light source unit for emitting light; a stop means for narrowing the spot diameter of the light emitted from the light source; a first microlens array to which the light narrowed by the stop means is incident; and a second microlens array to which the light emitted from the first microlens array is incident. Thereby, the spot of the light emitted from the second microlens array may be reduced in size so that the resolution of an image may be suitably improved.

US 5742262 A) describes an image display apparatus, e.g., a head-mounted image display apparatus, which uses a compact optical system and yet has minimal aberrations and a large exit pupil diameter. The image display apparatus has a liquid crystal display device, and an ocular lens for projecting an image displayed by the liquid crystal display device on a user's retina.

DISCLOSURE OF INVENTION

PROBLEM TO BE SOLVED BY THE INVENTION

In Patent Reference 1, an incident NA (Numerical Aperture) of the laser light incident on the optical element is not considered in setting the pitch of the optical element units forming the optical element. In addition, while setting the pitch is based on the pupil diameter of the watcher, there is a problem that the visual performance changes dependently upon the positional change of the watcher, particularly the positional change in the front-rear direction.

In Patent Reference 2, since laser light is controlled not to be incident upon the edge of the lens, the lens is not effectively used in its entirety.

The above are examples of the problem to be solved by the present invention. It is an object of the present invention to provide an optical element enabling to securely watch the whole virtual image at any viewing position.

MEANS FOR SOLVING THE PROBLEM

An example for better understanding the invention describes an optical element which diffuses a laser light incident from a laser light source, comprising: a microlens array or a diffraction grating, wherein a pitch of the microlens array or the diffraction grating is set based on an incident numerical aperture of the laser light and a wavelength of the laser light such that distribution of the diffracted lights output from the optical element becomes uniform.

BRIEF DESCRIPTION OF THE DRAWINGS

FIG. 1 illustrates a schematic configuration of a HUD according to an embodiment.
FIG. 2 schematically illustrates a manner of scanning an optical screen with a laser light.
FIGS. 3A and 3B are diagrams for explaining a lens pitch and an incident NA of the laser light.
FIGS. 4A and 4B are diagrams for explaining an output light from the optical screen.
FIGS. 5A and 5B illustrate relation between a lens array and distribution of diffracted lights.
FIGS. 6A and 6B illustrate relation between the incident NA of the laser light and the diffracted lights.
FIG. 7 illustrates the distribution of diffracted lights according to the embodiment.
FIGS. 8A and 8B are diagrams for explaining other condition to obtain desired output lights.
FIG. 9 illustrates structure of a reflection-type optical screen.
FIGS. 10A and 10B illustrate structure of an optical screen using a diffraction grating.

DETAILED DESCRIPTION OF THE PREFERRED EMBODIMENT

The present invention is defined by independent claim 1. According to one example for better understanding the present invention, there is provided an optical element which diffuses a laser light incident from a laser light source, comprising: a microlens array or a diffraction grating, wherein a pitch of the microlens array or the diffraction grating is set based on an incident numerical aperture of the laser light and a wavelength of the laser light such that distribution of the diffracted lights output from the optical element becomes uniform.

The above optical element is used as an optical screen, for example, and diffuses and outputs the laser light incident from the laser light source. The optical element includes the microlens array or the diffraction grating, and its pitches are set based on an incident numerical aperture of the laser light and a wavelength of the laser light such that distribution of the diffracted lights output from the optical element becomes uniform. Thus, the light quantity distribution of the light output from the optical element can be uniform, regardless of the viewpoint and the optical system arranged behind.

In one mode of the above optical element, the optical element is the microlens array or the diffraction grating, and the pitch of the microlens array or the diffraction grating is equal to or smaller than a spot diameter, based on the spot diameter of the laser light irradiated on the microlens array or the diffraction grating. Thus, performance of the microlens itself designed in a desired way can be exhibited.

In a preferred example, when the pitch is "p", the incident numerical aperture is "NAinc" and the wavelength is "λ", the pitch "p" satisfies:

$$\frac{1}{\sqrt{3}} \leq \frac{\mathrm{NA}\ \mathrm{inc}\cdot \mathrm{p}}{\lambda} \leq 1.22$$

In another preferred example, the laser light includes three laser lights of a red laser light, a green laser light and a blue laser light, and when the pitch is "p", the incident numerical aperture is "NAinc", the wavelength of the red laser light is "$\lambda_{RED}$" and the wavelength of the blue laser light is "$\lambda_{BLUE}$", the pitch "p" satisfies:

$$\frac{1}{\sqrt{3}} \lambda_{RED} \leq \mathrm{NA}\ \mathrm{inc}\cdot \mathrm{p} \leq 1.22 \lambda_{BLUE}$$

In another aspect of the present invention, there is provided a head-up display comprising: a laser light source; an optical screen which includes the above-described optical element and on which the laser light output from the laser light source is irradiated; and a combiner which reflects the laser light output from the optical screen.

EMBODIMENTS

Preferred embodiments of the present invention will be described below with reference to the attached drawings.

[Embodiment]

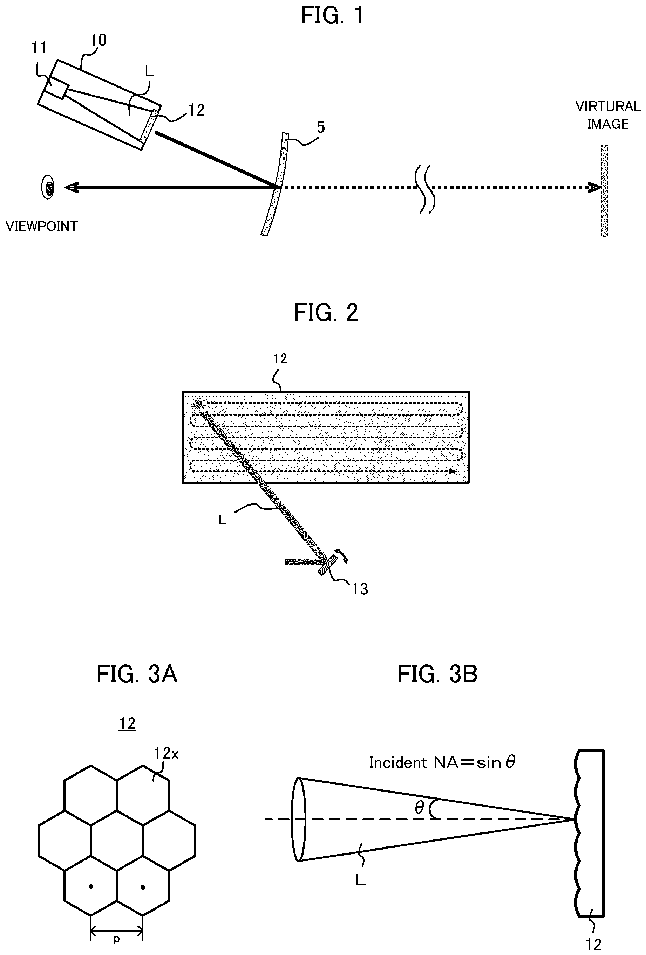

FIG. 1 illustrates a configuration of a HUD according to an embodiment of the present invention. The HUD includes a laser projector 10 and a combiner 5. The laser light forming the image to be visually recognized by a driver is emitted by the laser projector 10, is reflected by the combiner 5 which is a concave mirror, and reaches the visual point of the driver. Thus, the driver visually recognizes the image as the virtual image.
The laser projector 10 includes a laser light source 11, an optical screen 12 and a MEMS mirror 13. The laser light source 11 includes laser light sources of three colors, R(Red), G(Green) and B(Blue), and emits the RGB laser light corresponding to the image to be visually recognized by the driver. As illustrated in FIG. 3A, the optical screen 12 includes a lens array in which a plurality of microlenses (hereinafter simply referred to as "lens") 12x are arranged.
FIG. 2 illustrates the manner of scanning the optical screen 12 with the laser light L. The laser light L emitted by the laser light source 11 is reflected by the MEMS mirror 13 to scan the optical screen 12. Thus, the image to be visually recognized by the driver is drawn on the optical screen 12.
In order to enable the driver to securely see the whole virtual image, the embodiment is characterized in that the lens pitch p of the lens array forming the optical screen 12 is determined based on the incident NA (Numerical Aperture) of the laser light (incident light) concentrated on the lens array and the wavelength of the laser light. Specifically, the lens pitch p of the lens array forming the optical screen 12 is determined to satisfy the following equation (1):

$$\frac{1}{\sqrt{3}} \le \frac{\left(incident\ NA\right)\cdot\left(lens\ pitch\right)}{\left(laser\ wavelength\right)} \le 1.22 \qquad (1)$$

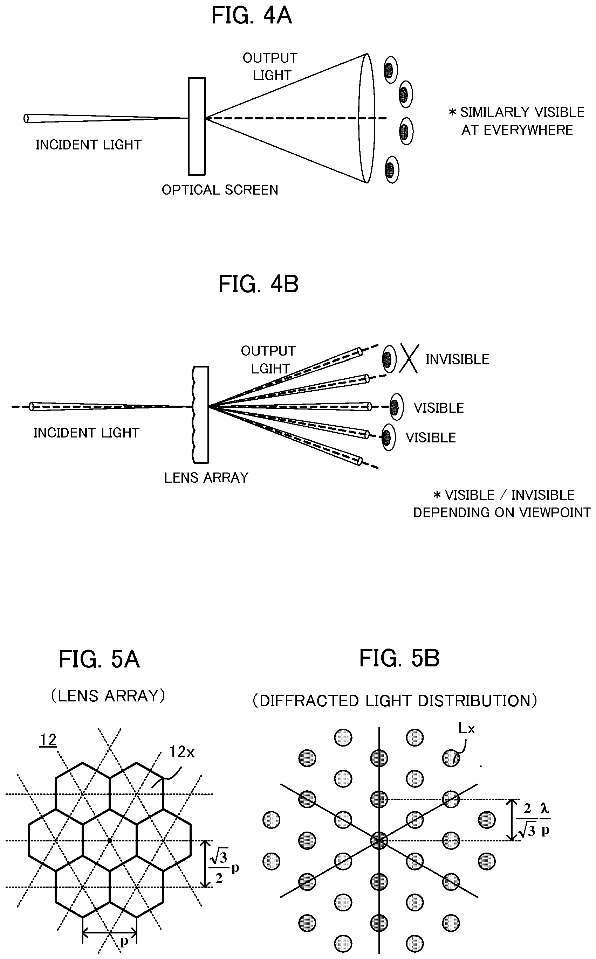

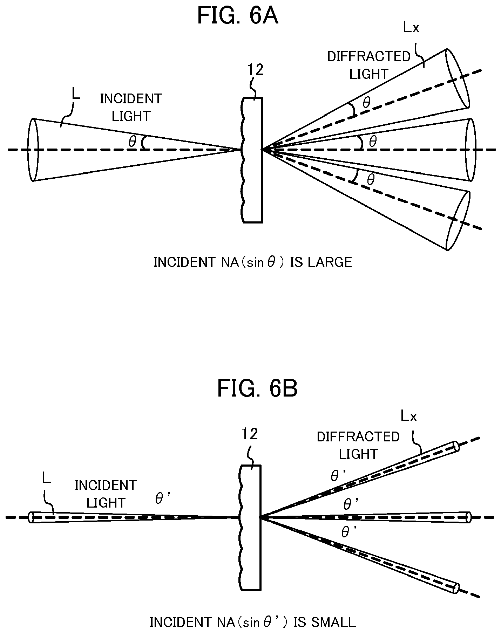

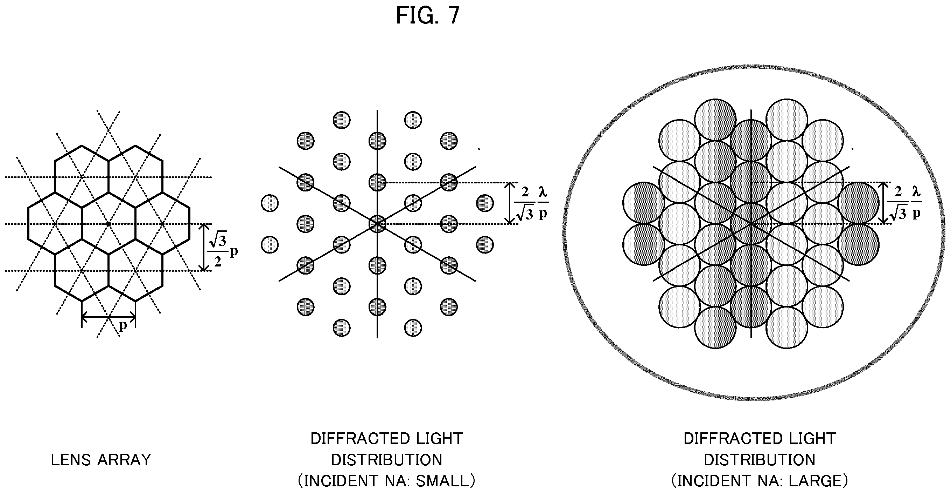

Here, as shown in FIG. 3A, the lens pitch p is defined as a distance p of the centers of the neighboring lenses 12x among the plural lenses 12x forming the lens array. Also, as shown in FIG. 3B, the incident NA is given as "Incident NA = sin $\theta$" by using the angle $\theta$ indicating the expanse of the incident light L incident upon the optical screen 12.
Here, the equation (1) will be described. FIG. 4A illustrates the output light when an ideal optical screen is used. Since the ideal optical screen uniformly diffuses the incident light, the laser spots of one pixel uniformly spread in the output light. Therefore, it is possible to see the image formed by the incident light similarly at any viewpoint.
FIG. 4B illustrates the output light when the lens array is used as the optical screen. When the lens array is used, since the microlenses forming the lens array cause diffraction by the periodic structure, the output light does not spread uniformly. Therefore, the image becomes visible and invisible depending upon the viewpoint.
FIG. 5A illustrates the lens pitch p of the lens array, and FIG. 5B illustrates distribution of the diffracted lights output from the lens array. By grating theory, gaps of the diffracted lights output from the lens array depend on the lens period. For example, when the lens array having the lens pitch p shown in FIG. 5A is used, the gap of the diffracted lights becomes $(2/\sqrt{3})$ • ($\lambda$/p).
On the other hand, by scalar diffraction theory, the size of each diffracted light is determined by the incident NA of the incident light. Specifically, when the incident NA is large as shown in FIG. 6A, the size of the diffracted light (angle $\theta$) becomes large. When the incident NA is small as shown in FIG. 6B, the size of the diffracted light (angle $\theta$) becomes small.
As described above, as illustrated in FIG. 7, by increasing the incident NA to fill the gaps of the diffracted lights, it is possible to obtain the output light in which the diffracted lights are distributed almost uniformly. Namely, under the condition that the size of the diffracted light becomes equal to or larger than the gap of the diffracted lights, i.e., when the following equation (2) is satisfied, it becomes possible to obtain the almost ideal optical screen in which the light quantity (luminance) distribution of the output light is uniform.

$$2\left(incident\ NA\right) \ge \frac{2}{\sqrt{3}} \frac{\left(laser\ wavelength\right)}{\left(lens\ pitch\right)} \qquad (2)$$

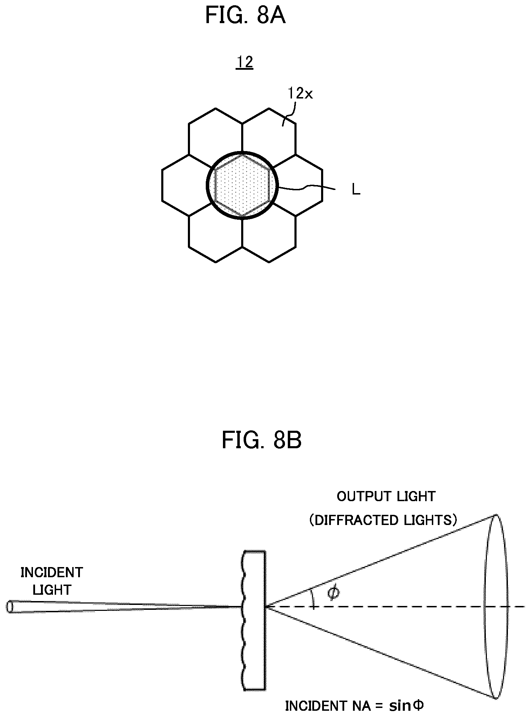

In the output light, the output NA as shown in FIG. 8B is also an important design element. The range of the viewpoint becomes narrow if the output NA is too small, and the luminance of the virtual image becomes insufficient if the output NA is too large. In order to obtain the output NA adapted to the specification of the system, the following condition (A) is further required.

(A) It is necessary that the spot of the incident light is larger than the diameter of the single lens. This is because, if the incident light is not incident on the entire surface of each lens, the performance of the single lens cannot be sufficiently exhibited. Therefore, as shown in FIG. 8A, the diameter of the incident light L is made larger than than the diameter of the lens 12x. Here, if the diameter of Airy disk (r=1.22λ/NA) is used as the spot diameter of the laser light, it is necessary that the following equation (3) is satisfied.

$$(lens\,pitch) \leq 1.22 \frac{(laser\,wavelength)}{(incident\,NA)} \quad (3)$$

From the above equations (2) and (3), when the equation (1) holds, the light quantity of the output light becomes uniform and a desired output NA can be obtained.

$$\frac{1}{\sqrt{3}} \leq \frac{(incident\ NA)\cdot(lens\ pitch)}{(laser\ wavelength)} \leq 1.22 \quad (1)$$

It is noted that the equation (1) includes a parameter of laser wavelength. When the laser light from the laser light source 11 is a color laser light, since the laser wavelength has the relation of Red>Green>Blue, the following equation (4) is obtained. Here, $\lambda_{RED}$ is the wavelength of the red laser light and $\lambda_{BLUE}$ is the wavelength of the blue laser light.

$$\frac{1}{\sqrt{3}} \lambda_{RED} \leq NA\ inc \cdot p \leq 1.22\,\lambda_{BLUE} \quad (4)$$

Next, examples of values satisfying the above equation (4) will be examined. As an example, it is assumed that the incident NA of the laser light is 0.003. Assuming that the wavelength $\lambda_{RED}$ of the red laser light in the equation (4) is 0.638 nm, the lens pitch becomes: p ≅ approximately 123 $\mu$m. Also, assuming that the wavelength $\lambda_{BLUE}$ of the blue laser light in the equation (4) is 0.450 nm, the lens pitch becomes: p ≦ approximately 183 $\mu$m. Therefore, the lens pitch p of the optical screen that can make the incident light uniform is: p = 123 to 183 $\mu$m.

As described above, by setting the lens pitch p to satisfy the above equation (1) or (4), the light quantity distribution of the incident light from the optical screen can be uniform regardless of the viewpoint and regardless of the optical system (e.g., the combiner) arranged behind the optical screen 12.

While it is ideal that the diffracted lights align without gaps, actually the neighboring diffracted lights have the gaps or the neighboring diffracted lights partly overlap with each other, and such gaps or the overlapping parts are not strictly uniform. However, since eyes of a human being recognize an object, not as a point but as an area of a certain degree, actually eyes of a human being visually average such minute gaps or overlapping parts to recognize as uniform. This is the meaning of the uniform diffracted lights in the present invention.

(Modified Examples)

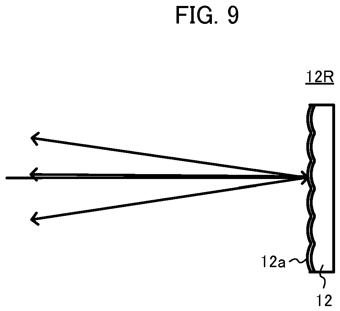

While the optical screen 12 is formed as the transmission-type in the above embodiment, the optical screen may be formed as a reflection-type. FIG. 9 illustrates an example of a reflection-type optical screen 12R. The reflection-type optical screen 12R is produced by forming a reflective layer 12a on the curved surface of the lens array of the transmission-type optical screen 12. The laser light incident on the lens array is reflected by the reflective layer 12a on the lens array. By the reflection-type optical screen, it is possible to enhance degree of freedom in arranging parts in the HUD.

While each lens 12x forming the lens array has the shape of hexagon in the above optical screen 12, the application of the present invention is not limited to this. Namely, each lens 12x may have a shape of tetragon or other polygon.

In the above optical screen 12, it is not necessary that the pitch of the lens array is the same in all directions. For example, even if the lens 12x has the hexagonal shape of somewhat pressed in the vertical or horizontal direction, the light quantity distribution of the incident light can be uniform when the lens pitch of both the vertical and horizontal direction satisfies the equation (1) or (4). Further, the neighboring lenses 12x may have gaps.

(Other embodiments)

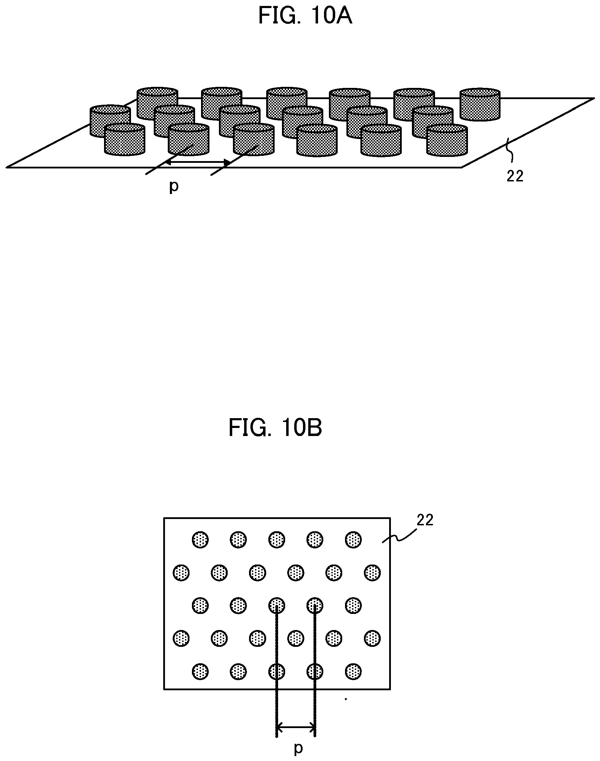

While the optical screen 12 is formed by the lens array in the above embodiment, the application of the present invention is not limited to this. It is sufficient that the optical screen has periodic arrangement, and a diffraction grating may be used for example. FIGS. 10A and 10B illustrate structure of an optical screen 22 using a diffraction grating. FIG. 10A is a perspective view of the optical screen 22, and FIG. 10B is a plan view of the optical screen 22. The optical screen 22 using the diffraction grating also diffracts and outputs the incident light. At that time, by setting the grating pitch p to satisfy the above equation (1) or (4), the light quantity distribution of the output light may be uniform, similarly to the embodiment of the lens array.

INDUSTRIAL APPLICABILITY

This invention can be used for an optical screen for a laser projector.

BRIEF DESCRIPTION OF REFERENCE NUMBERS

[0041]

| | |
|---|---|
| 5 | Combiner |
| 10 | Laser projector |
| 11 | Laser light source |
| 12, 22 | Optical screen |
| 12x | Microlens |
| 13 | MEMS mirror |

**Claims**

1.   A head-up display comprising:

a laser light source;
an optical screen on which a laser light output from the laser light source is irradiated and which includes an optical element which diffuses the laser light incident from the laser light source; and
a combiner which reflects the laser light output from the optical screen,
wherein the laser light includes three laser lights of a red laser light, a green laser light and a blue laser light,
wherein the optical element includes a microlens array or a diffraction grating, and
wherein a pitch "p" of the microlens array or the diffraction grating satisfies:

$$\frac{1}{\sqrt{3}}\lambda_{RED} \leq N\,A\,inc \cdot p \leq 1.22\lambda_{BLUE}$$

when incident numerical aperture of the laser light is "NAinc", the wavelength of the red laser light is "$\lambda_{RED}$" and the wavelength of the blue laser light is "$\lambda_{BLUE}$".

**Patentansprüche**

1.   Head-Up-Anzeige mit:

einer Laserlichtquelle;
einem optischen Bildschirm, auf den ein von der Laserlichtquelle ausgegebenes Laserlicht gestrahlt wird, und der ein optisches Element umfasst, das das von der Laserlichtquelle einfallende Laserlicht diffundiert; und
einem Kombinierer, der das von der Laserlichtquelle ausgegebene Laserlicht reflektiert,
wobei das Laserlicht drei Laserlichter eines roten Laserlichts, eines grünen Laserlichts, und eines blauen Laserlichts umfasst,
wobei das optische Element eine Mikrolinsenanordnung oder ein Beugungsgitter umfasst, und
wobei ein Abstand "p" der Mikrolinsenanordnung oder des Beugungsgitters

$$\frac{1}{\sqrt{3}} \lambda_{ROT} \leq N\,A\,inc \cdot p \leq 1{,}22\lambda_{BLAU}$$

erfüllt,
wenn eine einfallende numerische Apertur des Laserlichts "NAinc" ist, die Wellenlänge des roten Laserlichts "$\lambda_{ROT}$" ist, und die Wellenlänge des blauen Laserlichts "$\lambda_{BLAU}$" ist.

**Revendications**

1. Affichage tête haute qui comprend :

   une source de lumière laser ;
   un écran optique sur lequel une lumière laser délivrée par la source de lumière laser est irradiée, et qui comprend un élément optique qui diffuse la lumière laser incidente depuis la source de lumière laser ; et
   un combineur qui réfléchit la lumière laser délivrée par l'écran optique,
   dans lequel la lumière laser comprend trois lumières laser d'une lumière laser rouge, d'une lumière laser verte et d'une lumière laser bleue,
   dans lequel l'élément optique comprend un groupe de microlentilles ou un réseau de diffraction, et
   dans lequel un pas « p » du groupe de microlentilles ou du réseau de diffraction satisfait :

$$\frac{1}{\sqrt{3}} \lambda_{RED} \leq N\,A\,inc \cdot p \leq 1{.}22\lambda_{BLUE}$$

   lorsque l'ouverture numérique incidente de la lumière laser est « NAinc », la longueur d'onde de la lumière laser rouge est « $\lambda_{RED}$ » et la longueur d'onde de la lumière laser bleue est « $\lambda_{BLUE}$ ».

# FIG. 1

# FIG. 2

# FIG. 3A

# FIG. 3B

Incident $NA = \sin\theta$

# FIG. 4A

OUTPUT
LIGHT

INCIDENT LIGHT

OPTICAL SCREEN

*SIMILARLY VISIBLE
AT EVERYWHERE

# FIG. 4B

OUTPUT
LGIHT

INCIDENT LIGHT

LENS ARRAY

INVISIBLE

VISIBLE

VISIBLE

*VISIBLE / INVISIBLE
DEPENDING ON VIEWPOINT

# FIG. 5A

(LENS ARRAY)

12

12x

$\dfrac{\sqrt{3}}{2}p$

p

# FIG. 5B

(DIFFRACTED LIGHT DISTRIBUTION)

Lx

$\dfrac{2}{\sqrt{3}}\dfrac{\lambda}{p}$

# FIG. 6A

Lx

DIFFRACTED
LIGHT

12

L  INCIDENT
   LIGHT

$\theta$

$\theta$

$\theta$

$\theta$

INCIDENT NA($\sin\theta$) IS LARGE

# FIG. 6B

Lx

12  DIFFRACTED
    LIGHT

L  INCIDENT
   LIGHT  $\theta'$

$\theta'$

$\theta'$

$\theta'$

INCIDENT NA($\sin\theta'$) IS SMALL

FIG. 7

LENS ARRAY

DIFFRACTED LIGHT DISTRIBUTION (INCIDENT NA: SMALL)

DIFFRACTED LIGHT DISTRIBUTION (INCIDENT NA: LARGE)

# FIG. 8A

# FIG. 8B

FIG. 9

FIG. 10A

FIG. 10B

EP 3 109 688 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013064985 A
- JP 5075595 B
- US 2013050655 A1
- US 2010053565 A1
- US 2009135374 A1
- WO 2013175549 A1
- US 5742262 A